## Europäisches Patentamt

## European Patent Office

## Office européen des brevets

(19)

(11) Veröffentlichungsnummer: **0 400 360 B1**

(12) **EUROPÄISCHE PATENTSCHRIFT**

(45) Veröffentlichungstag der Patentschrift: **22.12.93**

(51) Int. Cl.5: **B05D 3/02**, B05D 7/16, C09D 167/00

(21) Anmeldenummer: **90108630.6**

(22) Anmeldetag: **08.05.90**

(54) **Verfahren zum Beschichten von metallischen Gegenständen im Bandlackierverfahren.**

(30) Priorität: **27.05.89 DE 3917319**

(43) Veröffentlichungstag der Anmeldung:
**05.12.90 Patentblatt 90/49**

(45) Bekanntmachung des Hinweises auf die
Patenterteilung:
**22.12.93 Patentblatt 93/51**

(84) Benannte Vertragsstaaten:
**AT BE CH DE DK ES FR GB IT LI NL SE**

(56) Entgegenhaltungen:
EP-A- 0 288 964     DE-A- 2 744 782
DE-A- 3 033 586     DE-A- 3 035 917
DE-A- 3 322 722     DE-B- 2 639 491

(73) Patentinhaber: **BASF Lacke + Farben AG**
**Glasuritstrasse 1**
**D-48165 Münster-Hiltrup(DE)**

(72) Erfinder: **Klier, Konrad, Dr.**
**Beverförderweg 11**
**D-4715 Davensberg(DE)**
Erfinder: **Stübbe, Winfried**
**Niendamm 66**
**D-4402 Greven(DE)**

(74) Vertreter: **Münch, Volker, Dr. et al**
**BASF Lacke + Farben AG**
**Patente/Lizenzen/Dokumentation,**
**Postfach 61 23**
**D-48136 Münster (DE)**

EP 0 400 360 B1

## Beschreibung

Die vorliegende Erfindung betrifft ein Verfahren zum Beschichten von metallischen Gegenständen im Bandlackierverfahren, bei dem

I.) auf das Metallband eine Grundierung A mit einer Trockenfilmschichtdicke von mindestens 5 $\mu$m und ein Decklack B mit einer Trockenfilmschichtdicke von mindestens 10 $\mu$m aufgebracht wird

oder

II.) auf das Metallband eine Einschichtlackierung C mit einer Trockenfilmschichtdicke von mindestens 10 $\mu$m aufgebracht wird

und

III.) die Grundierung A und der Decklack B bzw. die Einschichtlackierung C jeweils bei einer Objekttemperatur von 200 bis 260 ° C und bei einer Einbrennzeit von 25 bis 70 Sekunden ausgehärtet werden

und

IV.) die Grundierung A und/oder der Decklack B oder die Einschichtlackierung C ein Gemisch aus

$a_1$) einem oder mehreren hydroxylgruppenhaltigen Polyestern mit einem zahlenmittleren Moleulargewicht von 5.000 bis 20.000, einer Säurezahl von 1 bis 15 mg KOH/g und einer OH-Zahl von 5 bis 30 mg KOH/g

und

$a_2$) einem oder mehreren mit Caprolactamen oder Oximen blockierten, oligomeren Polyisocyanaten auf Basis von Hexamethylendiisocyanat enthält.

Gegenstand der vorliegenden Erfindung sind außerdem die nach diesem Verfahren beschichteten metallischen Gegenstände sowie deren Verwendung zur Herstellung von Haushaltsgeräten.

Es ist bekannt, zum Beschichten von Metallbändern im Bandlackierverfahren flüssige hitzehärtbare Beschichtungsmittel einzusetzen, die aus einer Lösung eines Hydroxylgruppen enthaltenden Bindemittels, z.B. eines Polyesters, und eines geblockten Polyisocyanates als Vernetzer in einem organischen Lösungsmittel bestehen. Die so erhaltenen, gehärteten Beschichtungen besitzen zwar eine relativ gute Licht- und Wetterbeständigkeit, weisen jedoch den erheblichen Nachteil auf, daß sie nur mäßige mechanische Verformbarkeitseigenschaften sowie relativ schlechte Abriebeigenschaften und schlechte Kratzfestigkeit besitzen. Dies ist besonders gravierend, wenn die beschichteten Metallbleche bei der weiteren Verarbeitung noch verformt werden. So werden häufig, auch wenn die Verformung bei höheren Temperaturen durchgeführt wird, wie z.B. bei Temperaturen oberhalb der Glasübergangstemperatur der Beschichtungsmittel, Risse der Beschichtungen beim Verformen beim bzw. nach dem Abkühlen der Bleche beobachtet.

Zur Verbesserung der Verformbarkeit der beschichteten Bleche wurde beispielsweise in der DE-OS 3033586 vorgeschlagen, den im Bandlackierverfahren eingesetzten Beschichtungsmitteln auf der Basis einer Lösung von hydroxylgruppenhaltigen Polyestern und blockierten Isocyanaten 10 bis 30 Gew.-% eines in der Lösung suspendierten feinteiligen Polyamids zuzusetzen. Die Mengen an eingesetzten Polyester und blockiertem Isocyanat werden in den Beschichtungsmitteln so gewählt, daß das Verhältnis von hydroxylfunktionellem Bindemittel zu blockiertem Polyisocyanat im Bereich von 0,5 bis 5:1, vorzugsweise von 1 bis 3:1 liegt.

Aus der EP-A-288964 ist ein Verfahren zum Beschichten von metallischen Gegenständen im Bandlackierverfahren bekannt, bei dem die resultierenden Beschichtungen eine relativ gute Verformbarkeit aufweisen. Die in diesem Verfahren eingesetzten Beschichtungsmittel enthalten als Bindemittel- und Härterkomponente 20 bis 40 Gew.-% eines Gemisches aus

a) 70 bis 95 Gew.-% hydroxylgruppenhaltigem Polyester

und

b) 5 bis 30 Gew.-% eines blockierten Polyisocyanates.

Die nach dem Verfahren der EP-A-288964 erhaltenen Beschichtungen weisen jedoch den Nachteil auf, daß die Härte der Beschichtungen gering ist. Einen Hinweis, wie die Härte der Beschichtungen verbessert werden kann, enthält die Schrift aber nicht. Vielmehr lag der EP-A-288964 die Aufgabe zugrunde, ein Verfahren zur Verfügung zu stellen, bei dem bei den üblichen Schichtstärken von 25 bis 45 $\mu$m spritzstrukturähnliche Oberflächen erzielt werden.

Schließlich sind auch aus der DE-AS-2639491 für das Bandlackierverfahren geeignete Beschichtungsmittel bekannt, die ebenfalls ein Gemisch aus 50 bis 95 Gew.-% hydroxylgruppen tragender Polyester und 5 bis 50 Gew.-% blockiertem Polyisocyanat enthalten. Die eingesetzten Polyester weisen Hydroxylzahlen von 33 bis 300 mg KOH/g und Säurezahlen von 0 bis 30 mg KOH/g auf. Als Isocyanatkomponente werden mit Acetessigsäureestern blockiertes Hexamethylendiisocyanat bzw. entsprechende Derivate des Hexamethylendiisocyanates eingesetzt.

2

Weiterhin sind aus der DE-A 3322722 Einkomponenten-Einbrennlacke bekannt, die hydroxylgruppenhaltige Polyester sowie blockiertes 2-Methyl-1,5-diisocyanatopentan und/oder blockiertes 2-Ethyl-1,4-diisocyanatobutan enthalten. Aus der DE-A 2744782 sind Einbrennlacke bekannt, die neben hydroxylgruppenhaltigen Polyestern mit cyclischen Amidinen blockierte Polyisocyanate enthalten. In den aus diesen beiden Dokumenten bekannten Einbrennlacken wird pro OH-Äquivalent der Polyhydroxylverbindung etwa 1 Äquivalent NCO der Polyisocyanatoverbindung eingesetzt.

Der vorliegenden Erfindung lag somit die Aufgabe zugrunde, ein Verfahren zur Beschichtung von metallischen Gegenständen im Bandlackierverfahren zu entwickeln, bei dem Beschichtungen erzielt werden, die sowohl hohe Flexibilität, als auch gleichzeitig eine möglichst hohe Härte (Bleistifthärte H-2H) und somit hohe Kratzfestigkeit und hohe Abriebbeständigkeit aufweisen. Insbesondere sollten, wenn bei Temperaturen im Bereich der Glasübergangstemperatur verformt wird, beim Verformen, beim Abkühlen bzw. nach dem Abkühlen keine Risse auftreten. Die Flexibilität der resultierenden Beschichtung sollte dabei möglichst wenig vom jeweiligen Pigment-Bindemittel-Verhältnis abhängig sein.

Weiterhin sollten die resultierenden Beschichtungen hervorragende Korrosionsschutzeigenschaften und gute Chemikalienbeständigkeiten, beispielsweise gegenüber Methylethylketon, Alkoholen und Waschmitteln, besitzen. Schließlich sollte das Deckvermögen der Überzüge gut sein und es sollten eine gute Substrathaftung und im Falle der Zweischichtlackierungen auch eine gute Zwischenhaftung erzielt werden.

Diese Aufgabe wird überraschenderweise durch ein Verfahren zum Beschichten von metallischen Gegenständen im Bandlackierverfahren gelöst, bei dem

I.) auf das Metallband eine Grundierung A mit einer Trockenfilmschichtdicke von mindestens 5 $\mu$m und ein Decklack B mit einer Trockenfilmschichtdicke von mindestens 10 $\mu$m aufgebracht wird

oder

II.) auf das Metallband eine Einschichtlackierung C mit einer Trockenfilmschichtdicke von mindestens 10 $\mu$m aufgebracht wird

und

III.) die Grundierung A und der Decklack B bzw. die Einschichtlackierung C jeweils bei einer Objekttemperatur von 200 bis 260°C und bei einer Einbrennzeit von 25 bis 70 Sekunden ausgehärtet werden

und

IV.) die Grundierung A und/oder der Decklack B oder die Einschichtlackierung C ein Gemisch aus

$a_1$) einem oder mehreren hydroxylgruppenhaltigen Polyestern mit einem zahlenmittleren Molekulargewicht von 5.000 bis 20.000, einer Säurezahl von 1 bis 15 mg KOH/g und einer OH-Zahl von 5 bis 30 mg KOH/g

und

$a_2$) einem oder mehreren mit Caprolactamen oder Oximen blockierten, oligomeren Polyisocyanaten auf Basis von Hexamethylendiisocyanat enthält.

Das Verfahren ist dadurch gekennzeichnet, daß die Mengen an eingesetztem hydroxylgruppenhaltigen Polyester (Komponente $a_1$) und blockiertem Polyisocyanat (Komponente $a_2$) so gewählt werden, daß das Äquivalentverhältnis der NCO-Gruppen der Komponente $a_2$ zu den OH-Gruppen der Komponente $a_1$ zwischen 2,0:1 und 7:1, bevorzugt zwischen 2,3:1 und 7:1, liegt.

Gegenstand der vorliegenden Erfindung sind außerdem die nach diesem Verfahren beschichteten metallischen Gegenstände sowie deren Verwendung zur Herstellung Von Haushaltsgeräten.

Es ist überraschend und war nicht vorhersehbar, daß die nach dem erfindungsgemäßen Verfahren hergestellten Beschichtungen eine hohe Flexibilität und eine hohe Härte aufweisen. Normalerweise bedingt eine hohe Flexibilität der Beschichtung nämlich eine nur geringe Härte und umgekehrt. Überraschend und von großem praktischen Nutzen ist auch die Tatsache, daß die nach dem erfindungsgemäßen Verfahren hergestellten Beschichtungen beim Verformen, Abkühlen und nach dem Abkühlen der beschichteten Teile keine Risse zeigen, wenn die Verformung bei Temperaturen im Bereich der Glasübergangstemperatur der Beschichtung durchgeführt wird. Überraschend ist vor allem auch die nur geringe bzw. zum Teil fehlende Abhängigkeit der Flexibilität der resultierenden Beschichtung vom Pigment/Bindemittelverhältnis der eingesetzten Beschichtungsmittel, da normalerweise mit steigendem Pigmentanteil der Beschichtungsmittel die Flexibilität der resultierenden Beschichtung deutlich abnimmt.

Außer der hohen Flexibilität und hohen Härte zeichnen sich die erhaltenen Beschichtungen durch einen sehr guten Korrosionsschutz, gute Chemikalien- und Waschmittelbeständigkeit sowie eine gute Substrat- und Zwischenhaftung aus.

Die in dem erfindungsgemäßen Verfahren eingesetzten Polyesterharze $a_1$ sind bekannt. Sie werden nach den üblichen Verfahren (vgl. z.B. Dr. P. Olding, Ph.D. BA. & G. Hayward C. Chem., MRSC, Resins for Surface Coatings, Volume III, veröffentlicht von SITA Technology, 203 Gardiner House, Broomhill Road, London SW 18 4 JQ, Englang, 1987) aufgebaut aus aliphatischen und/oder cycloaliphatischen Di-, Tri- oder höherwertigen Alkoholen, ggf. zusammen mit einwertigen Alkoholen, und aus insbesondere aromatischen Dicarbonsäuren. Es können selbstverständlich aber auch aliphatische oder cycloaliphatische Carbonsäuren sowie höherwertige Polycarbonsäuren mitverwendet werden.

Beispiele für geeignete Alkohole sind Ethylenglykol, 1,2-Propandiol, 1,3-Propandiol, 2,2-Dimethyl-1,3-propandiol, 1,2-Butandiol, 1,3-Butandiol, 1,4-Butandiol, 1,5-Pentandiol, 3-Methyl-1,5-pentandiol, 1,6-Hexandiol, 2-Ethyl-1,6-hexandiol, 2,2,4-Trimethyl-1,6-hexandiol, 1,4-Dimethylolcyclohexan, Glycerin, Trimethylolethan, Trimethylolpropan, Dimethylolpropionsäure, Pentaerythrit, Veretherungsprodukte von Diolen und Polyolen, z.B. Di- und Tri-Ethylenglykol, Polyethylenglykol, Neopentylglykolester von Hydroxipivalinsäure. Bevorzugt eingesetzt werden Ethylenglykol, 2,2-Dimethyl-1,3-Propandiol, insbesondere bei Kombination der resultierenden Polyester mit Isocyanaten auf Basis des Hexanmethylendiisocyanates oder seiner Derivate.

Beispiele für geeignete Carbonsäuren bzw. deren Derivate sind (cyclo-)aliphatische Dicarbonsäuren, wie z.B. Adipinsäure, Acelainsäure, Tetrahydrophthalsäure, Hexahydrophthalsäure, Endomethylentetrahydrophthalsäure und aromatische Carbonsäuren, wie Phthalsäure, Isophthalsäure, Terephthalsäure, Trimellithsäure und Pyromellithsäure. Besonders gut geeignet, insbesondere für die Kombination der resultierenden Polyester mit Isocyanaten auf Basis des Hexamethylendiisocyanates oder seiner Derivate sind aromatische Di- oder Tricarbonsäuren wie z.B. Terephthalsäure und/oder Isophthalsäure. Die in der Grundierung, im Decklack und in der Einschichtlackierung verwendeten Polyester haben Säurezahlen von 1 bis 15 mg KOH/g, Hydroxylzahlen von 5 bis 30 mg KOH/g, zahlenmittlere Molekulargewichte von 5.000 bis 20.000, bevorzugt 6.000 bis 10.000 sowie bevorzugt Dispersitäten <8.

Die als Vernetzungsmittel für die Polyesterharze eingesetzten blockierten Polyisocyanate sind bevorzugt oligomere blockierte Polyisocyanate (Komponente $a_2$). Beispiele für oligomere Polyisocyanate sind solche mit einer Isocyanurat-Struktur, so z.B. das Polyisocyanurat-Polyisocyanat von Hexamethylendiisocyanat und solche mit einer Biuretstruktur, beispielsweise das Polyisocyanat mit Biuretstruktur auf Basis von Hexamethylendiisocyanat.

Werden in den Beschichtungsmitteln Polyester eingesetzt, die aus möglichst weichen, flexiblen Einheiten aufgebaut sind, so werden auch andere, härtere Polyisocyanate, beispielsweise auf Basis des Isophorondiisocyanates, eingesetzt.

Als Blockierungsmittel für die Polyisocyanate kommen Caprolactame, z.B. $\epsilon$-Caprolactam, und Oxime in Frage, wobei die Oxime bevorzugt sind. Besonders bevorzugt wird Butanonoxim eingesetzt. Als besonders gut geeignetes blockiertes Polyisocyanat hat sich mit Butanonoxim blockiertes, trimerisiertes Hexamethylendiisocyanat erwiesen.

Es ist erfindungswesentlich, daß die hydroxylgruppenhaltigen Polyester (Komponente $a_1$) und die blockierten Polyisocyanate (Komponente $a_2$) in den Beschichtungsmitteln in einem solchen Mischungsverhältnis eingesetzt werden, daß das Äquivalentverhältnis der NCO-Gruppen der Komponente $a_2$ zu den OH-Gruppen der Komponente $a_1$ zwischen 2,0:1 und 7:1, bevorzugt zwischen 2,3:1 und 7:1, besonders bevorzugt zwischen 4:1 und 6:1 liegt. Die Gesamtmenge des Gemisches aus den Komponenten $a_1$ und $a_2$ liegt dabei im allgemeinen zwischen 20 und 40 Gew.-%, bezogen auf das Gesamtgewicht des Beschichtungsmittels.

Durch die Einstellung dieses speziellen Mischungsverhältnisses von hydroxylgruppenhaltigen Polyester und blockiertem Isocyanat werden überraschenderweise Beschichtungsmittel erhalten, die zu Beschichtungen mit guter Verformbarkeit (Verformung bei Temperaturen im Bereich der Glasübergangstemperatur), d.h. T-Bend/T-Tape-Werte von 0 gemessen nach den Vorschriften der European Coil Coating Association, bei gleichzeitig hoher Härte, d.h. Bleistifthärte H-2H und Knoop-Härte von > 17, führen. Vorteilhaft ist ferner, daß dabei die Härte und Verformbarkeit nur geringfügig oder gar nicht abhängig sind vom Pigment- zu Bindemittelfestkörper-Verhältnis.

Werden dagegen die Komponenten $a_1$ und $a_2$ in solchen Mengen eingesetzt, daß das Äquivalentverhältnis der NCO- zu den OH-Gruppen < 2:1 ist, so weisen die resultierenden Beschichtungen bei einer guten Härte nur eine schlechte Verformbarkeit auf und sowohl Härte als auch Verformbarkeit der Beschichtungen sind sehr stark vom Pigment-Bindemittelfestkörper-Verhältnis abhängig.

Wird dagegen der Isocyanatüberschuß in den Beschichtungsmitteln zu groß - entsprechend einem Äquivalentverhältnis der NCO- zu den OH-Gruppen > 7:1 - weisen die resultierenden Beschichtungen eine zu geringe Lösemittelbeständigkeit und bei sehr großem Isocyanatüberschuß auch nur eine zu geringe Härte auf.

Die in dem erfindungsgemäßen Verfahren eingesetzten Beschichtungsmittel enthalten außerdem 0,1 bis 2,0 Gew.-%, bezogen auf das Gesamtgewicht des Beschichtungsmittels, eines üblichen Katalysators, wie z.B. übliche Lewis-Säuren wie z.B. zinnorganische und zinkorganische Katalysatoren. Als Beispiele seien genannt: Dibutylzinndilaurat und Zinkoctoat.

4

Weiterhin enthalten die Beschichtungsmittel 20 bis 65 Gew.-%, bezogen auf das Gesamtgewicht des Beschichtungsmittels, eines oder mehrerer organischer Lösungsmittel, wie beispielsweise aromatische Kohlenwasserstoffe, Ester, Ether, Ketone, Alkohole und andere organische Verbindungen. Bevorzugte Lösungsmittel sind aromatische Kohlenwasserstoffe, Ester und Glykolether.

Die Beschichtungsmittel können noch 15 bis 40 Gew.-%, bezogen auf das Gesamtgewicht des Beschichtungsmittels, übliche Pigmente und/oder Füllstoffe und/oder Hilfs- und Zusatzstoffe enthalten. Als Pigmente werden beispielsweise Titandioxid oder anorganische Buntpigmente, wie Chrom-, Nickel-, Kobalt- und Eisenoxidpigmente sowie metallisierende Pigmente, wie Aluminiumbronze, eingesetzt. Beispiele für geeignete Füllstoffe sind verschiedene Silikate, wie z.B. Glimmer-, Kaolin- und Talkum-Typen, amorphe Kieselsäure und Bariumsulfat.

Als Beispiele für übliche Hilfs- und Zusatzstoffe sind Verlaufsmittel, Stabilisatoren, Emulgatoren, Gleitmittel und Haftvermittler zu nennen.

Die Herstellung der verwendeten Beschichtungsmittel erfolgt durch Mischen der einzelnen Komponenten, wobei zuerst die Bindemittel im Lösemittel oder Lösemittelgemisch gelöst werden. Sofern den Beschichtungsmitteln noch weitere unlösliche Bestandteile, wie Pigmente, Füllstoffe, Additive usw. zugesetzt werden, können diese entweder in Lösung zugegeben oder mit den in der Lackindustrie üblichen Mahlaggregaten dispergiert werden.

Zur Durchführung des erfindungsgemäßen Verfahrens werden die oben beschriebenen Beschichtungsmittel mittels des Bandlackierverfahrens appliziert. Das erfindungsgemäße Verfahren umfaßt eine ein- oder zweischichtige Verarbeitung, d.h. es kann entweder nur eine Schicht aufgebracht werden oder die Beschichtung setzt sich aus einer Grundierung und einem Decklack zusammen, die jeweils alle nach dem Bandlackierverfahren appliziert werden.

Bevorzugt werden die Beschichtungsmassen in Form einer Einschichtlackierung aufgebracht, wobei die Trockenfilmschichtdicke dieser Einschichtlackierung mindestens 10 $\mu$m, bevorzugt 15 bis 25 $\mu$m, beträgt.

Im Falle der Zweischichtlackierung können sowohl die Grundierung als auch der Decklack aus den oben beschriebenen Beschichtungsmitteln bestehen. Bevorzugt werden aber die beschriebenen Beschichtungsmittel als Decklack eingesetzt. Die Trockenfilmschichtdicken betragen im Falle der Zweischichtlackierung im allgemeinen mindestens 5 $\mu$m, bevorzugt 6 bis 12 $\mu$m, für die Grundierung und mindestens 10 $\mu$m, bevorzugt 15 bis 25 $\mu$m, für den Decklack.

Das Bandlackierverfahren ist an sich bekannt (vgl. z.B. Kittel, Lehrbuch der Lacke und Beschichtungen, Band VII, Verarbeitung von Lacken und Beschichtungsmaterialien, Verlag W.A. Colomb in der Heenemann Verlagsgesellschaft mbH, Berlin und Oberschwandorf, 1989) und braucht daher hier nicht näher erläutert werden.

Die Aushärtung der Beschichtungsmittel erfolgt gewöhnlich bei Objekttemperaturen von 200 bis 260°C nach einem in der Bandbeschichtung üblichen Verfahren, wobei Einbrennzeiten bei der Bandbeschichtung von 25 bis 70 Sekunden gewählt werden.

Beispiele für die mittels des erfindungsgemäßen Verfahrens beschichteten metallischen Gegenständen sind Metallbleche und Metallbänder aus verschiedenen Eisenlegierungen, Schwarzblech, Weißblech und Aluminium, die ggf. noch mit einer Passivierungsschicht auf Basis verschiedener Chrom-, Nickel- und Zinkverbindungen versehen sind. Bevorzugt werden phosphatierte und chromatierte Stahlbleche eingesetzt. Das erfindungsgemäße Verfahren ist besonders geeignet für die Beschichtung von Haushaltsgeräten, wie z.B. Kühlschränken, Tiefkühltruhen, Gefrierschränken, Waschmaschinen, Geschirrspülmaschinen, Trocknern, Mikrowellenherden, Gas- und Elektroherden etc., weiterhin für die Beschichtung von Regalen, Trennwänden und anderen Materialien mit einer hohen Beschichtungshärte.

Im folgenden wird die Erfindung anhand von Ausführungsbeispielen näher erläutert. Alle Angaben über Teile und Prozentsätze sind Gewichtsangaben, falls nicht ausdrücklich etwas anderes festgestellt wird.

Zur Herstellung der verschiedenen Beschichtungsmittel wird ein nach den üblichen Methoden aus den folgenden Komponenten hergestellter Polyester 1 eingesetzt:

43 Teile Isophthalsäure

22 Teile Terephthalsäure

22 Teile Neopentylglykol

13 Teile Ethylenglykol

Der erhaltene Polyester weist eine Hydroxylzahl von 20 bis 25 mg KOH/g, eine Säurezahl < 2 mg KOH/g und ein zahlenmittleres Molekulargewicht von 8.000, bestimmt mittels GPC über Polystyrolstandard, auf. Er wird in den Beschichtungsmitteln in Form einer 40 %igen Lösung in einem handelsüblichen hochsiedenden Aromatengemisch eingesetzt.

Beispiel 1 (Vergleich)

26,87 Teile einer 40 %igen Lösung des oben beschriebenen Polyesters in einem handelsüblichen hochsiedenden Aromatengemisch, 22,00 Teile Titandioxid vom Rutil-Typ, 0,71 Teile eines handelsüblichen Antioxidans und Hitzestabilisators, 0,6 Teile eines Gleitmittels auf Basis einer Polytetrafluorethylen/Polyethylen-Paste, 0,6 Teile eines handelsüblichen Verlaufsmittels und 4,28 Teile Butyldiglykolacetat werden mit Hilfe einer Rührwerksmühle auf eine Hegman-Feinheit von ca. 10 μm gemahlen. Anschließend werden 37,78 Teile der oben beschriebenen 40 %igen Lösung des Polyesters, 2,31 Teile eines handelsüblichen Verlaufsmittels, 3,66 Teile mit Butanonoxim blockiertes trimerisiertes Hexamethylendiisocyanat, 75 %ig in Solventnaphtha® 100 und 1,19 Teile Dibutylzinndilaurat, 10 %ig in Xylol zugegeben und 10 min gerührt. Danach wird die Viskosität des so erhaltenen Beschichtungsmittels 1 mit Butyldiglykolacetat auf 120 s, gemessen im DIN 4 Auslaufbecher bei 23 °C, eingestellt.

Das Beschichtungsmittel 1 wird einschichtig mittels des Bandlackierverfahrens auf Stahlblech (Granodine C6005), das einem sauren Passivierungsverfahren unterworfen wurde, in einer Trockenfilm-schichtdicke von 24 μm appliziert und 62 s im Drehtellerofen bis zum Erreichen einer Objekttemperatur von 240°C ausgehärtet. Die Prüfung der resultierenden Beschichtung erfolgt nach den entsprechenden ECCA-Vorschriften (ECCA ist die Abkürzung für European Coil Coating Association). Die Ergebnisse sind in Tabelle 3 dargestellt.

Beispiele 2-19

Es werden analog Beispiel 1 verschiedene Beschichtungsmittel 2-19 hergestellt, die sich vom Beschichtungsmittel 1 nur durch ein anderes Pigment- : Bindemittelfestkörper-Verhältnis bzw. anderes NCO:OH-Äquivalentverhältnis unterscheiden. Die Applikation und Aushärtung der Beschichtungsmittel sowie die Prüfung der resultierenden Beschichtungen erfolgt analog Beispiel 1. Die Zusammensetzung der Beschichtungsmittel ist in Tabelle 1 und 2, die Prüfergebnisse der resultierenden Beschichtungen sind in Tabelle 3 angegeben.

Beispiel 20

Es wird analog Beispiel 1 ein Beschichtungsmittel 20 hergestellt, das sich vom Beschichtungsmittel 1 nur durch ein anderes Pigment- : Bindemittelfestkörper-Verhältnis und ein anderes NCO:OH-Äquivalentverhältnis unterscheidet. Die Zusammensetzung dieses Beschichtungsmittels 20 ist in Tabelle 2 angegeben. Die Applikation und Aushärtung des Beschichtungsmittels erfolgt analog Beispiel 1. Von der resultierenden Beschichtung wird der Glanzgrad, die Helligkeit, die Härte nach König, Knoop, Buchholz und die Bleistifthärte, der T-Bend-Wert bei 80°C, der Tg-Wert sowie die Lösemittelbeständigkeit geprüft. Die Prüfergebnisse sind in Tabelle 4 dargestellt.

Außerdem wird das Beschichtungsmittel 20 auf phosphatiertes Stahlblech (Bonder 101) in einer Trockenfilmstärke von 24 μm einschichtig appliziert und 64 s im Drehtellerofen bis zum Erreichen einer Objekttemperatur von 240°C eingebrannt. Die resultierenden Beschichtungen werden in bezug auf ihre Beständigkeit gegenüber Waschmitteln, Lösemitteln, Salzwasser und Feuchtigkeit geprüft. Die Prüfergebnisse sind ebenfalls in Tabelle 4 dargestellt.

Beispiel 21 (Vergleich)

Es wird analog Beispiel 20 ein Beschichtungsmittel 21 hergestellt, das sich vom Beschichtungsmittel 20 nur durch ein anderes Pigment- : Bindemittelfestkörper-Verhältnis und ein anderes NCO:OH-Äquivalentverhältnis unterscheidet. Die Zusammensetzung dieses Beschichtungsmittels 20 ist in Tabelle 2 angegeben. Die Applikation und Aushärtung des Beschichtungsmittels sowie die Prüfung der resultierenden Beschichtung erfolgt analog Beispiel 20. Die Prüfergebnisse sind in Tabelle 4 dargestellt.

Tabelle 1: Zusammensetzung der Beschichtungsmittel 1 bis 10

| Beispiel | 1(V)[1] | 2(V)[1] | 3(V)[1] | 4(V)[1] | 5 | 6 | 7 | 8 | 9 | 10 |
|---|---|---|---|---|---|---|---|---|---|---|
| Polyester 1 [2] | 26,87 | 21,59 | 26,60 | 21,42 | 23,68 | 22,09 | 22,45 | 22,82 | 21,34 | 20,04 |
| Titandioxid | 22,0 | 37,33 | 21,78 | 37,03 | 26,58 | 31,50 | 28,60 | 25,6 | 30,42 | 34,65 |
| Stabilisator | 0,71 | 0,57 | 0,70 | 0,57 | 0,63 | 0,58 | 0,59 | 0,6 | 0,56 | 0,53 |
| Gleitmittel | 0,6 | 0,48 | 0,59 | 0,48 | 0,53 | 0,49 | 0,5 | 0,51 | 0,48 | 0,45 |
| Verlaufsmittel | 0,6 | 0,48 | 0,59 | 0,48 | 0,53 | 0,49 | 0,5 | 0,51 | 0,48 | 0,45 |
| Butylglykolacetat | 4,28 | 3,44 | 4,24 | 3,41 | 3,77 | 3,52 | 3,58 | 3,63 | 3,40 | 3,19 |
| Polyester 1 | 37,78 | 31,16 | 38,39 | 30,88 | 34,15 | 31,87 | 32,39 | 32,92 | 30.78 | 28,91 |
| Verlaufsmittel | 2,31 | 1,05 | 1,29 | 1,04 | 1,15 | 1,08 | 1,09 | 1,11 | 1,04 | 0,98 |
| Isocyanat [3] | 3,66 | 2,95 | 4,65 | 3,74 | 7,93 | 7,40 | 9,31 | 11,29 | 10,56 | 9,92 |
| Dibutylzinndilaurat [4] | 1,19 | 0,95 | 1,17 | 0,95 | 1,05 | 0,98 | 0,99 | 1,01 | 0,94 | 0,88 |
| Summe | 100 | 100 | 100 | 100 | 100 | 100 | 100 | 100 | 100 | 100 |

[1]   Vergleich

[2]   40 %ige Lösung des Polyesters 1 in einem handelsüblichen hochsiedenden Aromatengemisch

[3]   mit Butanonoxim blockiertes trimerisiertes Hexamethylendiisocyanat, 75 %ig in
Solventnaphtha 100 ®

[4]   10 %ige Lösung in Xylol

Tabelle 2: Zusammensetzung der Beschichtungsmittel 11 bis 21

| Beispiel | 11 | 12 | 13 | 14 | 15(V)[1] | 16(V)[1] | 17(V)[1] | 18(V)[1] | 19(V)[1] | 20 | 21(V)[1] |
|---|---|---|---|---|---|---|---|---|---|---|---|
| Polyester 1 [2] | 23,59 | 19,42 | 21,11 | 19,84 | 19,06 | 17,38 | 16,51 | 17,07 | 14,77 | 20,13 | 25,86 |
| Titandioxid | 19,31 | 33,57 | 23,69 | 28,28 | 24,29 | 24,78 | 28,55 | 13,98 | 25,54 | 31,14 | 24,72 |
| Stabilisator | 0,62 | 0,51 | 0,56 | 0,52 | 0,5 | 0,46 | 0,44 | 0,45 | 0,39 | 0,53 | 0,68 |
| Gleitmittel | 0,53 | 0,43 | 0,47 | 0,44 | 0,43 | 0,39 | 0,37 | 0,38 | 0,33 | 0,45 | 0,58 |
| Verlaufsmittel | 0,53 | 0,43 | 0,47 | 0,44 | 0,43 | 0,39 | 0,37 | 0,38 | 0,33 | 0,45 | 0,58 |
| Butylglykolacetat | 3,76 | 3,09 | 3,36 | 3,16 | 3,04 | 2,77 | 2,63 | 2,72 | 2,35 | 3,21 | 4,12 |
| Polyester 1 | 34,02 | 28,02 | 30,45 | 28,62 | 27,5 | 25,06 | 23,81 | 24,62 | 21,32 | 29,04 | 37,31 |
| Verlaufsmittel | 1,15 | 0,95 | 1,03 | 0,97 | 0,92 | 0,85 | 0,80 | 0,83 | 0,72 | 0,98 | 1,26 |
| Isocyanat [3] | 15,45 | 12,72 | 17,93 | 16,85 | 22,99 | 27,15 | 25,79 | 38,82 | 33,60 | 13,18 | 3,75 |
| Dibutylzinndi-laurat [4] | 1,04 | 0,86 | 0,93 | 0,88 | 0,84 | 0,77 | 0,73 | 0,75 | 0,65 | 0,89 | 1,14 |
| Summe | 100 | 100 | 100 | 100 | 100 | 100 | 100 | 100 | 100 | 100 | 100 |

[1] Vergleich

[2] 40 %ige Lösung des Polyesters 1 in einem handelsüblichen hochsiedenden Aromatengemisch

[3] mit Butanonoxim blockiertes trimerisiertes Hexamethylendiisocyanat, 75 %ig in Solventnaphtha 100 (R)

[4] 10 %ige Lösung in Xylol

EP 0 400 360 B1

Tabelle 3: Prüfergebnisse

| Bei-spiel | NCO:OH[1] (mol) | Gew.-Verh.[2] NCO:OH | P:BM[3] | T-Bend[4] | Knoop-[5] Härte | MEK-[6] Test |
|---|---|---|---|---|---|---|
| 1 | 0,9 | 1 : 9,4 | 1:1,35 | 1,5 | 19,9 | ≥ 100 |
| 2 | 0,9 | 1 : 9,5 | 1:0,64 | 5 | 25,6 | ≥ 100 |
| 3 | 1,2 | 1 : 7,5 | 1:1,39 | 2,5 | 18,8 | ≥ 100 |
| 4 | 1,2 | 1 : 7,5 | 1:0,66 | 8 | 20,9 | ≥ 100 |
| 5 | 2,3 | 1 : 3,9 | 1:1,12 | 0 | 19,5 | ≥ 100 |
| 6 | 2,3 | 1 : 3,9 | 1:0,88 | 2 | 18,9 | ≥ 100 |
| 7 | 2,9 | 1 : 3,1 | 1:1,03 | 0 | 18,6 | ≥ 100 |
| 8 | 3,4 | 1 : 2,6 | 1:1,23 | 0 | 17,8 | ≥ 100 |
| 9 | 3,4 | 1 : 2,6 | 1:0,97 | 2 | 19,9 | ≥ 100 |
| 10 | 3,4 | 1 : 2,6 | 1:0,8 | 2 | 20,8 | ≥ 100 |
| 11 | 4,5 | 1 : 2,0 | 1:0,97 | 0 | 18,8 | ≥ 100 |
| 12 | 4,5 | 1 : 2,0 | 1:0,87 | 0 | 20,4 | ≥ 100 |
| 13 | 5,8 | 1 : 1,5 | 1:1,46 | 0 | 18,9 | ≥ 100 |
| 14 | 5,8 | 1 : 1,5 | 1:1,15 | 0 | 19,3 | ≥ 100 |
| 15 | 8,3 | 1 : 1,1 | 1:1,5 | 0 | 20,7 | < 100 |
| 16 | 10,8 | 1,25 : 1 | 1:1,53 | 0 | – | < 100 |
| 17 | 10,8 | 1,25 : 1 | 1:1,26 | 0,5 | 19,0 | < 100 |
| 18 | 15,7 | 1,67 : 1 | 1:3,31 | 0 | 10,9 | < 100 |
| 19 | 15,7 | 1,67 : 1 | 1:1,57 | 0 | 11,0 | < 100 |
| 20 | 4,5 | 1 : 1,22 | 1:1,22 | 0 | 19,5 | ≥ 100 |
| 21 | 1 | 1 : 1,17 | 1:1,17 | 5 | 19,5 | ≥ 100 |

Erläuterungen zu Tabelle 3

1) Äquivalentverhältnis der Isocyanatgruppen zu den
OH-Gruppen des Polyesters

2) Gewichtsverhältnis des eingesetzten Isocyanates (ohne
Lösungsmittel) zum eingesetzten Polyester (ohne Lösungsmittel)

3) Gewichtsverhältnis von Pigment zu Bindemittelfestkörper, wobei der Bindemittelfestkörper die Summe aus
Polyester (ohne Lösungsmittel) und Isocyanat (ohne Lösungsmittel) darstellt

4) gemessen nach den Vorschriften der ECCA (European Coil
Coating Association) bei 80°C

5) gemessen nach Ford-Norm EU-BI 12/2:Tukon- und
Härteprüfung von Lacken.
Die ermittelten Werte stellen Mittelwerte aus 5 Messungen dar.

6) Ein mit Methylethylketon getränkter Wattebausch wird in
regelmäßigen Doppelhüben über den Film bewegt, bis der
Untergrund sichtbar ist. Die Auflagekraft ist ca. 20 N.

Tabelle 4: Weitere Prüfergebnisse ausgewählter Beschichtungsmittel

|  | Beispiel 20 | Beispiel 21 |
|---|---|---|
| NCO:OH (mol) [1] | 4,5 | 1 |
| P:BM [2] | 1 : 1,22 | 1 : 1,17 |
| Glanzgrad (60°) | > 90 | > 90 |
| Helligkeit (*A*B*L*) [3] | > 90 | > 90 |
| Härte (König) (s) | 170 | 160 |
| Knoophärte [4] | 19,5 | 19,5 |
| T-Bend bei 80°C [5] | T0 | T5 |
| Buchholzhärte | 117 | 117 |
| Bleistifthärte | F-H | F-H |
| Tg (°C) [6] | 60 | 60 |
| MEK-Test [7] | > 100 | > 100 |
| Waschmittelbeständigkeit [8] | sehr gut | sehr gut |
| Alkoholbeständigkeit [9] | gut | gut |
| Salzsprühtest 240 h [10] | sehr gut | sehr gut |
| Feuchtraumklima [11] | keine Blasen | keine Blasen |

Erläuterungen zu Tabelle 4

1)      Äquivalentverhältnis der Isocyanatgruppen zu den
        OH-Gruppen des Polyesters

2)      Gewichtsverhältnis von Pigment zu Bindemittelfest-
        körper

3)      gemessen gemäß CIE-Richtlinien

4)      gemessen nach Ford-Norm EU-BI 12/2.
        Die ermittelten Werte stellten Mittelwerte aus 5 Mes-
        sungen dar

5)      gemessen bei 80°C nach den Vorschriften der ECCA

6)      gemessen über eine thermomechanische Analyse

7)      Ein mit Methylethylketon getränkter Wattebausch wird
        in regelmäßigen Doppelhüben über den Film bewegt, bis
        der Untergrund sichtbar ist. Die Auflagekraft ist ca.
        20 N.

8)      bestimmt nach Miele Werknorm TLK/PA 277

9)      bestimmt nach DIN 50021

10)     bestimmt nach DIN 50017

11)     bestimmt nach DIN 53168

Zusammenfassung der Prüfergenisse

Die zum Vergleich angeführten Beispiele 1-4 und 21 belegen, daß bei einer zu geringen Menge an eingesetztem blockierten Polyisocyanat, entsprechend einem NCO:OH-Äquivalentverhältnis < 2:1 die Verformbarkeit der resultierenden Beschichtung nur gering ist und mit steigendem Pigmentanteil die Härte zwar zunimmt, gleichzeitig aber die Verformbarkeit der Beschichtungen völlig unzureichend ist.

Wird dagegen - wie in den ebenfalls zum Vergleich angeführten Beispielen 15-19 - die Menge an eingesetztem blockierten Polyisocyanat zu hoch, d.h., liegt das Äquivalentverhältnis von NCO:OH-Gruppen oberhalb von 7:1, so ist zwar die Verformbarkeit der resultierenden Beschichtungen sehr gut, jedoch sind die Lösemittelbeständigkeit und mit zunehmendem NCO:OH-Äquivalentverhältnis in steigendem Maße auch die Härte deutlich verschlechtert.

Nur bei Einsatz von hydroxylgruppenhaltigem Polyester und blockiertem Polyisocyanat in Mengen, die einem Äquivalentverhältnis von NCO- zu OH-Gruppen von 2,0:1 bis 7:1 entsprechen, werden Beschichtungsmittel erhalten, die zu Beschichtungen mit hoher Härte bei gleichzeitig guter Verformbarkeit und Lösemittelbeständigkeit führen (Beispiele 5-14 sowie 20). Außerdem zeigen diese Beschichtungsmittel eine nur geringe oder gar keine Abhängigkeit der Härte und Verformbarkeit der resultierenden Beschichtungen vom Pigment: Bindemittelfestkörperverhältnis der eingesetzten Beschichtungsmittel.

**Patentansprüche**

1. Verfahren zum Beschichten von metallischen Gegenständen im Bandlackierverfahren, bei dem
    I.) auf das Metallband eine Grundierung A mit einer Trockenfilmschichtdicke von mindestens 5 $\mu$m und ein Decklack B mit einer Trockenfilmschichtdicke von mindestens 10 $\mu$m aufgebracht wird
    oder
    II.) auf das Metallband eine Einschichtlackierung C mit einer Trockenfilmschichtdicke von mindestens 10 $\mu$m aufgebracht wird
    und
    III.) die Grundierung A und der Decklack B bzw. die Einschichtlackierung C jeweils bei einer Objekttemperatur von 200 bis 260°C und bei einer Einbrennzeit von 25 bis 70 Sekunden ausgehärtet werden
    und
    IV.) die Grundierung A und/oder der Decklack B oder die Einschichtlackierung C ein Gemisch aus
       $a_1$) einem oder mehreren hydroxylgruppenhaltigen Polyestern mit einem zahlenmittleren Molekulargewicht von 5.000 bis 20.000, einer Säurezahl von 1 bis 15 mg KOH/g und einer OH-Zahl von 5 bis 30 mg KOH/g
       und
       $a_2$) einem oder mehreren mit Caprolactamen oder Oximen blockierten, oligomeren Polyisocyanaten auf Basis von Hexamethylendiisocyanat enthält,
    dadurch gekennzeichnet, daß
       die Mengen an eingesetztem hydroxylgruppenhaltigem Polyester (Komponente $a_1$) und blockiertem Polyisocyanat (Komponente $a_2$) so gewählt werden, daß das Äquivalentverhältnis der NCO-Gruppen der Komponente $a_2$ zu den OH-Gruppen der Komponente $a_1$ zwischen 2,0:1 und 7:1, bevorzugt zwischen 2,3:1 und 7:1, liegt.

2. Verfahren nach Anspruch 1, dadurch gekennzeichnet, daß die Mengen an eingesetztem hydroxylgruppenhaltigem Polyester (Komponente $a_1$) und blockiertem Polyisocyanat (Komponente $a_2$) so gewählt werden, daß das Äquivalentverhältnis der NCO-Gruppen der Komponente $a_2$ zu den OH-Gruppen der Komponente $a_1$ zwischen 4,0:1 und 6,0:1 liegt.

3. Verfahren nach Anspruch 1 oder 2, dadurch gekennzeichnet, daß die Beschichtungsmasse
    a) 20 bis 40 Gew.-% des Gemisches aus den Komponenten $a_1$ und $a_2$
    b) 15 bis 40 Gew.-% Pigmente und/oder Füllstoffe und/oder geeignete Hilfsstoffe und Additive,
    c) 0,1 bis 2,0 Gew.-% Katalysator
    d) 20 bis 65 Gew.-% eines oder mehrerer organischer Lösungsmittel
    enthält, wobei die Summe der Gewichtsanteile der Komponenten a bis d jeweils 100 Gew.-% beträgt.

4. Verfahren nach einem der Ansprüche 1 bis 3, dadurch gekennzeichnet, daß als blockiertes Polyisocyanat (Komponente $a_2$) blockiertes trimerisiertes Hexamethylendiisocyanat eingesetzt wird.

5. Beschichteter metallischer Gegenstand, dadurch gekennzeichnet, daß er nach einem Verfahren nach einem der Ansprüche 1 bis 4 erhalten wurde.

6. Verwendung der nach den Verfahren nach einem der Ansprüche 1 bis 4 hergestellten metallischen Gegenstände zur Herstellung von Haushaltsgeräten.

**Claims**

1. Process for coating metal objects by the coil coating process, in which

   I.) a primer A of a dry film thickness of not less than 5 $\mu$m and a topcoat B of a dry film thickness of not less than 10 $\mu$m are applied to the metal strip

   or

   II.) a one-coat coating C of a dry film thickness of not less than 10 $\mu$m is applied to the metal strip

   and

   III.) the primer A and the topcoat B or the one-coat coating C are each cured at an object temperature of 200 to 260 °C for a baking period of 25 to 70 seconds

   and

   IV.) the primer and/or the topcoat B or the one-coat coating C comprises a mixture of

   $a_1$) one or more hydroxyl-containing polyesters of a number average molecular weight of 5000 to 20,000, an acid value of 1 to 15 mg of KOH/g and a hydroxyl value of 5 to 30 mg of KOH/g

   and of

   $a_2$) one or more oligomeric polyisocyanates blocked with caprolactams or oximes and based on hexamethylene diisocyanate,

   characterized in that the amounts of the hydroxyl-containing polyester (component $a_1$) and of the blocked polyisocyanate (component $a_2$) are chosen such that the equivalence ratio of the NCO groups of the component $a_2$ to the OH groups of the component $a_1$ is between 2.0:1 and 7:1, preferably between 2.3:1 and 7:1.

2. Process according to Claim 1, characterized in that the amounts of the hydroxyl-containing polyester (component $a_1$) and of the blocked polyisocyanate (component $a_2$) are chosen such that the equivalence ratio of the NCO groups of the component $a_2$ to the OH groups of the component $a_1$ is between 4.0:1 and 6.0:1.

3. Process according to Claim 1 or 2, characterized in that the coating composition comprises

   a) 20 to 40% by weight of the mixture of the components $a_1$ and $a_2$

   b) 15 to 40 % by weight of pigments and/or fillers and/or suitable auxiliaries and additives

   c) 0.1 to 2.0 % by weight of a catalyst and

   d) 20 to 65 % by weight of one or more organic solvents,

   the sum total of the amounts of the components a to d being in each case 100 % by weight.

4. Process according to any of Claims 1 to 3, characterized in that blocked trimerized hexamethylene diisocyanate is used as the blocked polyisocyanate (component $a_2$).

5. Coated metal object which has been obtained by a process according to any of Claims 1 to 4.

6. Use of the metal objects produced by the process according to any of Claims 1 to 4 for the manufacture of domestic appliances.

**Revendications**

1. Procédé pour revêtir des objets métalliques, dans le cadre d'un procédé de laquage en bande, dans lequel

   I.) on applique sur la bande métallique une couche primaire A ayant une épaisseur de feuil sec d'au moins 5 $\mu$m et une couche de finition B ayant une épaisseur de feuil sec d'au moins 10 $\mu$m, ou bien

   II) on applique sur la bande métallique un laquage mono-couche C ayant une épaisseur de feuil sec d'au moins 10 $\mu$m, et

   III) on durcit la couche primaire A et la couche de finition B ou le laquage mono-couche C, le subjectile ayant une température de 200 à 260 °C, pendant un temps de cuisson de 25 à 70 secondes, et

   IV) la couche primaire A et/ou la couche de finition B ou le laquage mono-couche C contiennent un mélange

   $a_1$) d'un ou plusieurs polyesters hydroxylés ayant une masse moléculaire moyenne en nombre de 5.000 à 20.000, un indice d'acide de 1 à 15 mg KOH/g et un indice d'hydroxyle de 5 à 30 mg KOH/g, et

14

$a_2$) d'un ou plusieurs polyisocyanates oligomères, bloqués par des caprolactames ou des oximes, à base de diisocyanate d'hexaméthylène,

caractérisé en ce que l'on choisit les quantités utilisées du polyester hydroxylé (composant $a_1$) et du polyisocyanate bloqué (composant $a_2$), de façon que le rapport équivalent des groupes NCO du composant $a_2$ aux groupes OH du composant $a_1$ soit compris entre 2,0:1 et 7:1, de préférence entre 2,3:1 et 7:1.

2. Procédé selon la revendication 1, caractérisé en ce que les quantités utilisées du polyester hydroxylé (composant $A_1$) et du polyisocyanate bloqué (composant $A_2$) sont choisies de façon que le rapport équivalent des groupes NCO du composant $a_2$ aux groupes OH du composant $a_1$ soit de 4,0 :1 à 6,0:1.

3. Procédé selon les revendications 1 ou 2, caractérisé en ce que la composition de revêtement contient
   a) de 20 à 40 % en poids d'un mélange des composants $a_1$ et $a_2$,
   b) de 15 à 40 % en poids de pigments et/ou de charges et/ou d'adjuvants et additifs appropriés,
   c) de 0,1 à 2,0 % en poids d'un catalyseur,
   d) de 20 à 65 % en poids d'un ou plusieurs solvants organiques,
   le total des fractions pondérales des composants a à d étant de 100 % en poids.

4. Procédé selon l'une des revendications 1 à 3, caractérisé en ce qu'on utilise comme polyisocyanate bloqué (composant $a_2$) un diisocyanate d'hexaméthylène trimérisé bloqué.

5. Objet métallique revêtu, caractérisé en ce qu'il a été obtenu par un procédé selon l'une des revendications 1 à 4.

6. Utilisation des objets métalliques fabriqués par le procédé selon l'une des revendications 1 à 4, pour fabriquer des appareils ménagers.